# EUROPEAN PATENT SPECIFICATION

(11) **EP 4 060 242 B1**
(45) Date of publication and mention of the grant of the patent: **27.12.2023**
(21) Application number: 22158458.4
(22) Date of filing: 24.02.2022
(51) Int. Cl.: F24F 7/003, F24F 7/06, F24F 8/108, F24F 13/02, F24F 3/16

(54) **MULTI-COMPARTMENT NEGATIVE AIR FILTRATION**
UNTERDRUCKFILTRATION MIT MEHREREN FÄCHERN
FILTRATION D'AIR NÉGATIF À PLUSIEURS COMPARTIMENTS

(30) Priority: 16.03.2021 US 202117249836
(43) Date of publication of application: 21.09.2022
(73) Proprietor: Carrier Corporation, Palm Beach Gardens, FL 33418 (US)
(72) Inventor: KUMAR, Munish, 122 004 Gurgaon (IN)
(74) Representative: Dehns

(56) References cited:
- CN-A- 108 507 111
- US-A- 5 593 470
- US-A- 5 904 896
- US-A1- 2006 021 375

## Description

The present invention relates a multi-compartment negative filtration system and a method of operating a multi-compartment negative air filtration system.

Negative air machines are used to remove contaminants from the air of an enclosed space. For example, negative air machines may be used to remove asbestos, mold, and/or microbes from the air. Once the negative air machine filters the contaminants from the air, depending on the configuration, the air may be either recycled within the space, or exhausted outside the space.

Negative air machines have been found to be particularly useful in hospital settings, where negative air machines are placed in particular rooms. Specifically, negative air machines have been used in various types of isolation rooms (e.g., airborne infection isolation (AII) rooms, protective isolation/environment (PE) rooms, convertible isolation rooms, and combination AII/PE rooms). By placing the negative air machines in these rooms, the spread of infectious diseases may be prevented, or at least mitigated.

To remove the microbes from the air, traditional negative air machines include a fan, at least one pre-filter, and a HEPA filter. The fan is used to create a negative pressure and draw air into the negative air machine (e.g., through the inlet and out of the outlet). The pre-filter is used to remove larger particles and debris from the air (e.g., large dust particles, hair, etc.). The HEPA filter is used to remove smaller particles from the air (e.g., the microbes). Commonly, the fan is disposed at the inlet of the negative air machine, with one or more of the filters (e.g., the pre-filter and/or the HEPA filter) disposed downstream of the fan. This generates a positive pressure across the filter(s) downstream of the fan. This positive pressure may cause increased stress on the filter(s) and/or on any seal around the filter(s), which may result in a leak of contaminants (e.g., either through a hole in a filter or through an opening in a seal around a filter). If contaminants are able to leak through the negative air machine then the negative air machine may not reliably prevent the spread of infectious diseases.

Traditionally, negative air machines include only compartment with only one inlet and only one outlet, which makes the negative air machine only capable of exhausting the treated air either in a single direction (i.e., either within the space or outside the space). This results in reduced flexibility for providing optimal treatment for certain types of spaces (e.g., hospital rooms, classrooms, etc.).

Accordingly, there remains a need for a multi-compartment negative air machine and method of operating such negative air machine, that is effectively removes contaminants from the air, while also providing increased flexibility.

US 5593470 A discloses a modular filtration system for cleaning HVAC ductwork, including first and second modular assemblies containing a plurality of filters. The modules can be easily transported into a site and connected to one another and to the ductwork. The system includes a plurality of wheels and external assembly protruding from the housing to assist in wheeling the housing up and down stairs.

According to a first aspect of the invention, a multi-compartment negative air filtration system is provided. The multi-compartment negative air filtration system includes a housing including a first compartment and a second compartment, the first compartment and the second compartment separated by at least one panel member. Each of the first compartment and the second compartment include an inlet, an outlet, a pre-filter disposed downstream of the inlet, a HEPA filter disposed downstream of the pre-filter, and a fan assembly disposed downstream of the HEPA filter. The fan assembly is in airflow communication with the pre-filter and the HEPA filter. The fan assembly generates a negative pressure across the pre-filter and the HEPA filter. The fan assembly of the first compartment and the fan assembly of the second compartment share a constant torque motor comprising an operating torque.

Optionally, the constant torque motor is operably connected to a selection device, the selection device configured to adjust the operating torque.

Optionally, the operating torque correlates to an approximately constant RPM, wherein the approximately constant RPM is between 800 and 1500 RPM.

Optionally, the fan assembly of the first compartment and the fan assembly of the second compartment each independently include a forward curved wheel blower.

Optionally, the housing further includes an interior surface, wherein an insulation is disposed on at least a portion of the interior surface.

Optionally, the insulation includes an exterior foil surface and a fiberglass body.

Optionally, each respective outlet includes a supply duct transition, each supply duct transition including an outlet flange and an outlet plate, wherein the outlet plate includes a plurality of apertures disposed therein.

Optionally, the multi-compartment negative air filtration system further includes at least one pressure switch, the pressure switch operably connected to an indicator, the indicator disposed on the housing.

Optionally, the pressure switch includes a tube, the tube including a first end and a second end, the first end disposed outside the housing and the second end disposed between the fan assembly and the HEPA filter.

Optionally, the indicator is configured to signal when at least one of the pre-filter and the HEPA filter are in need of replacement.

Optionally, the HEPA filter includes an exterior perimeter, a sealing assembly disposed about the exterior perimeter, the sealing assembly configured to prevent a bypass around the HEPA filter.

Optionally, the sealing assembly includes at least one gasket and at least one planar member.

Optionally, the multi-compartment negative air filtration system further includes a mounting rail disposed within the housing, the mounting rail disposed adjacent the sealing assembly.

Optionally, the inlet is disposed on a lower surface of the housing and the outlet is disposed on an upper surface of the housing, the inlet and the outlet being vertically oriented.

Optionally, the multi-compartment negative air filtration system further includes a plurality of wheels disposed on the lower surface of the housing.

Optionally, wherein the lower surface includes a surface area less 8 sq. ft. (0.7m²).

According to another aspect of the invention, a method for operating a multi-compartment negative air filtration system within a room is provided. The multi-compartment negative air filtration system includes a housing with a first compartment and a second compartment separated by at least one panel member, each of the first compartment and the second compartment including a pre-filter, a HEPA filter disposed downstream of the pre-filter, and a fan assembly disposed downstream of the HEPA filter, wherein the fan assembly of the first compartment and the fan assembly of the second compartment share a constant torque motor comprising an operating torque. The method includes a step for operating the first compartment in at least one of an air scrubber mode and a negative air mode, the air scrubber mode being defined by a first exhausted air being discharged within the room, the negative air mode being defined by the first exhausted air being discharged outside the room. The method includes a step for operating the second compartment in at least one of an air scrubber mode and a negative air mode, the air scrubber mode being defined by a second exhausted air being discharged within the room, the negative air mode being defined by the second exhausted air being discharged outside the room.

Optionally, both the first compartment and the second compartment are operated identically.

Optionally, one of the first compartment and the second compartment are operated in the air scrubber mode and one of the first compartment and the second compartment are operating in negative air mode. Optionally, the method is a method of operating the multi-compartment negative air filtration system of the first aspect or in line with any of the above combinations of features.

Certain exemplary embodiments will now be described in greater detail by way of example only and with reference to the accompanying drawings in which:
FIG. 1 is a perspective view of a multi-compartment negative air filtration system.
FIG. 2 is a perspective view of the pre-filter, as shown in FIG. 1, with insulation disposed on the interior surface of the housing.
FIG. 3 is a perspective view of a supply duct transition.
FIG. 4 is a perspective view of a pressure switch.
FIG. 5 is a perspective view of an indicator and a dial disposed on the housing.
FIG. 6 is a perspective view of two fan assemblies, sharing a constant torque motor.
FIG. 7 is a perspective view of a HEPA filter, depicting the exterior perimeter of the HEPA filter.
FIG. 8 is a perspective view of a sealing assembly disposed about the exterior perimeter of the HEPA filter shown in FIG. 7.
FIG. 9 is an illustration of the multi-compartment negative air filtration system, shown in FIG. 1, disposed within a room, with the first compartment operating in an air scrubber mode and the second compartment operating in a negative air mode.
FIG. 10 is a flow diagram illustrating a method of operating a multi-compartment negative air filtration system within a room.

A multi-compartment negative air filtration system and a method of operating the multi-compartment negative air filtration system within a room are provided. The multi-compartment negative air filtration system includes a housing defining a first compartment and second compartment separated by at least one panel member. Each of the first compartment and the second compartment of the multi-compartment negative air filtration system include, an inlet and an outlet, a pre-filter, a HEPA filter, and a fan assembly. The multi-compartment negative air filtration system, by disposing the fan assemblies downstream of the HEPA filters and the pre-filters, generates a negative pressure across the pre-filters and the HEPA filters. By generating a negative pressure across the filters (e.g., instead of a positive pressure), the multi-compartment negative air filtration system may more reliably prevent the spread of infectious diseases (e.g., compared to existing negative air filtration systems) by avoiding the generation of unneeded stress on the filters and the seal around the filters. In addition, the multi-compartment negative air filtration system provided herein, by including multiple compartments, each with their own inlet and outlet, may have increased flexibility for providing optimal treatment. For example, instead of only being able to exhaust the treated in a single direction (i.e., either within the room or outside the room), the multi-compartment negative air filtration system described herein may be able to exhaust the treated air in multiple directions, resulting in increased control of airflow within the room. Although described herein to be particularly useful in a hospital setting, it should be appreciated that the negative air filtration system may be used within any environment that is in need of contaminant filtration (e.g., classrooms, offices, home remediation, etc.).

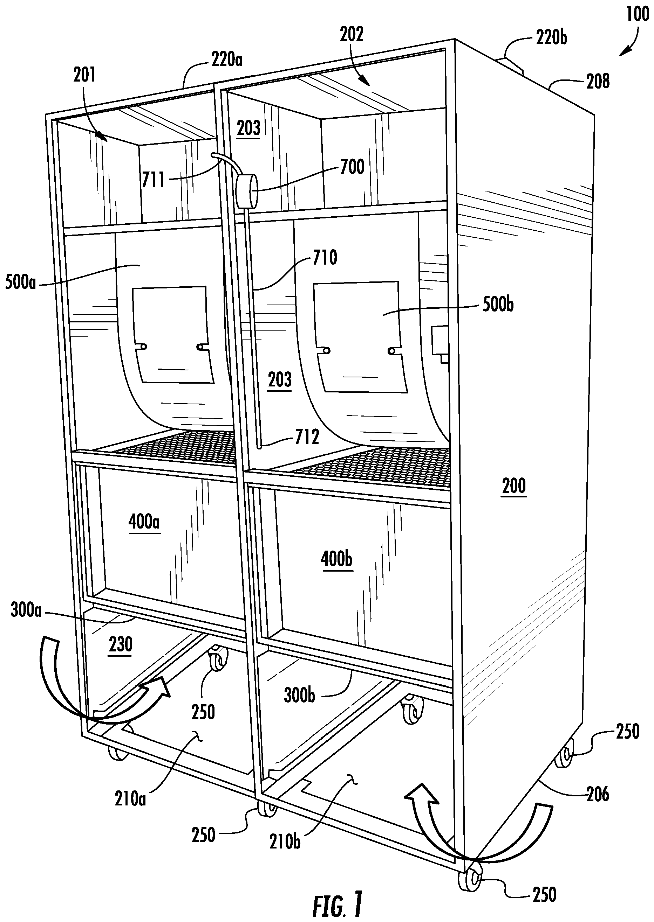

With reference now to the Figures, an exemplary multi-compartment negative air filtration system 100 is shown in FIG. 1. The multi-compartment negative air filtration system 100 includes a housing 200, which defines a first compartment 201 and a second compartment 202. The first compartment 201 and the second compartment 202 are separated by at least one panel member 203 (e.g., which may be sheet metal, etc.). Each of the first compartment 201 and the second compartment 202 include an inlet 210, an outlet 220, a pre-filter 300, a HEPA filter 400, and a fan assembly 500. It should be appreciated that like components within each compartment 201, 202 may be labeled similarly, but may be differentiated using an "(a)" or "(b)" addition. For example, as shown in FIG. 1, the HEPA filter 400 in the first compartment 201 includes "(a)", whereas the HEPA filter 400 in the second compartment 202 includes "(b)". It will be appreciated that the components within each compartment 201, 202 may be approximately identical to one another in certain instances.

As shown in FIG. 1, the pre-filters 300 are disposed within the housing 200, downstream of the inlets 210. The HEPA filters 400 are disposed within the housing 200, downstream of the pre-filters 300. The fan assemblies 500 are disposed within the housing 200, downstream of the HEPA filters 400. The fan assemblies 500 are in airflow communication with the pre-filters 300 and the HEPA filters 400. Being in airflow communication may be interpreted to mean that the airflow that is drawn into the multi-compartment negative air filtration system 100 (e.g., by the fan assemblies 500) is passed through the fan assemblies 500, the pre-filters 300, and the HEPA filters 400. The fan assemblies 500 generate a negative pressure across the pre-filters 300 and the HEPA filters 400 (e.g., instead of a positive pressure).

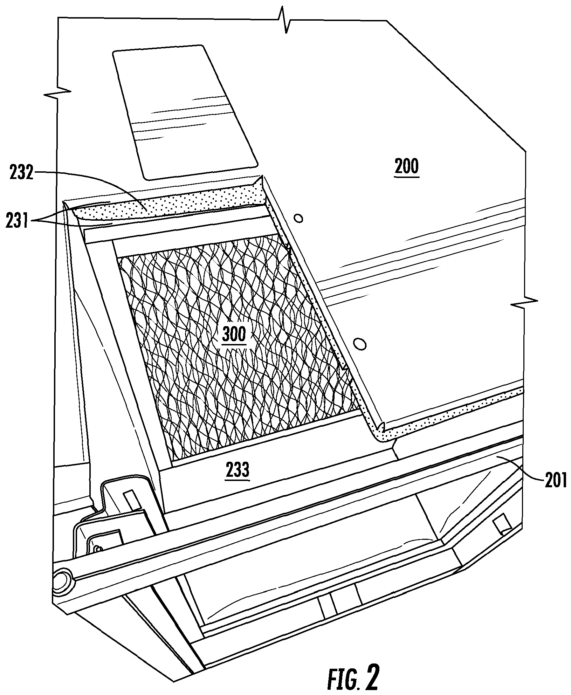

The housing 200 includes an interior surface 230, which may include insulation 231. For example, the housing 200 may be made of one or more pieces of sheet metal joined together (e.g., using any known fastening means) at the corners of the housing 200. The interior surface 230 of the housing 200 may be viewed as the inward facing surface of the pieces of sheet metal. In certain instances, the insulation 231 may line the entire interior surface 230 of the housing 200 to minimize noise outside the housing 200. It should be appreciated that, in certain instances, the insulation 231 lines only a portion of the interior surface 230 of the housing 200 (e.g., may only line the interior surface 230 near the fan assemblies 500, etc.). As shown in FIG. 2, the insulation 231 may include an exterior foil surface 233 and a fiberglass body 232.

The pre-filters 300 may be disposed directly adjacent to the HEPA filters 400. A perspective view of a pre-filter 300 installed within the multi-compartment negative air filtration system 100 is shown in FIG. 2. The pre-filters 300 may be easily removable and replaceable (e.g., if/when the pre-filter 300 becomes clogged). The pre-filters 300 may be used to remove larger particles (e.g., hair, dust, etc.) from the air entering the multi-compartment negative air filtration system 100 to avoid the larger particles from clogging the HEPA filter 400. The HEPA filters 400 may be used to remove fine contaminants (e.g., microbes, etc.) from the air before the air is either recycled within the space (e.g., back into the room, when operating in an air scrubber mode), or exhausted outside the space (e.g., outside of the room and/or building, when operating in a negative air mode).

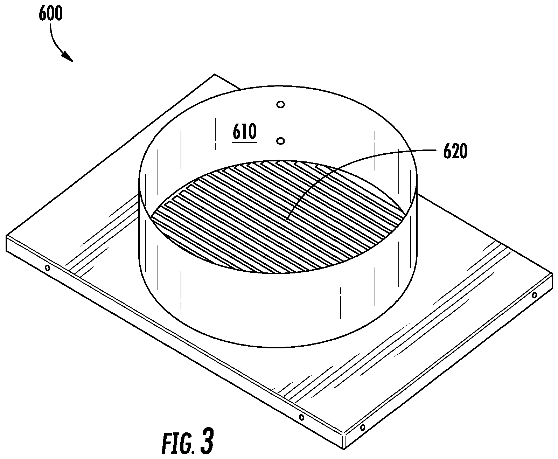

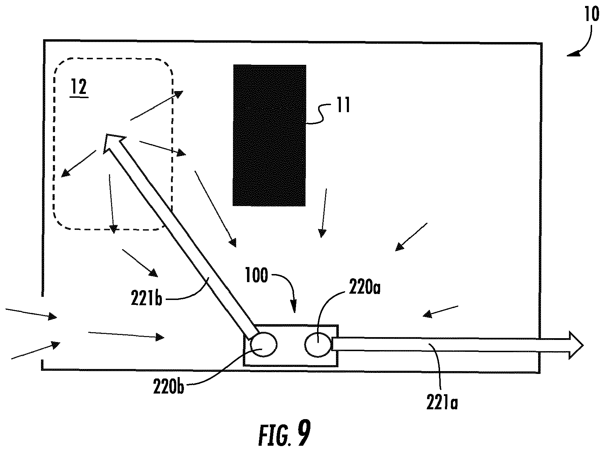

When exiting the multi-compartment negative air filtration system 100, the air may be passed through a duct (not shown). For ease of installation (e.g., to make it easy to connect with the duct), the multi-compartment negative air filtration system 100 may include a supply duct transition 600 (as shown in FIGs. 3). The supply duct transition 600 may be disposed on an upper surface 208 of the housing 200. The supply duct transition 600 may include an outlet flange 610 and an outlet plate 620 containing a plurality of apertures. The outlet flange 610 may extend circumferentially around the outlet plate 620. The outlet flange 610 may extend substantially perpendicular from the upper surface 208 of the housing 200. Substantially perpendicular may mean that the outlet flange 610 and the upper surface 208 of the housing 200 may form an angle of approximately 90° (e.g., +/- 5°). The outlet flange 610 may be sized to allow a duct to be configured over the outlet flange 610 (e.g., to allow the duct to be clamped to the outside of the outlet flange 610). The outlet plate 620 may be configured in any fashion capable of allowing air to flow out of the multi-compartment negative air filtration system 100 and through the duct 221 (shown in FIG. 9).

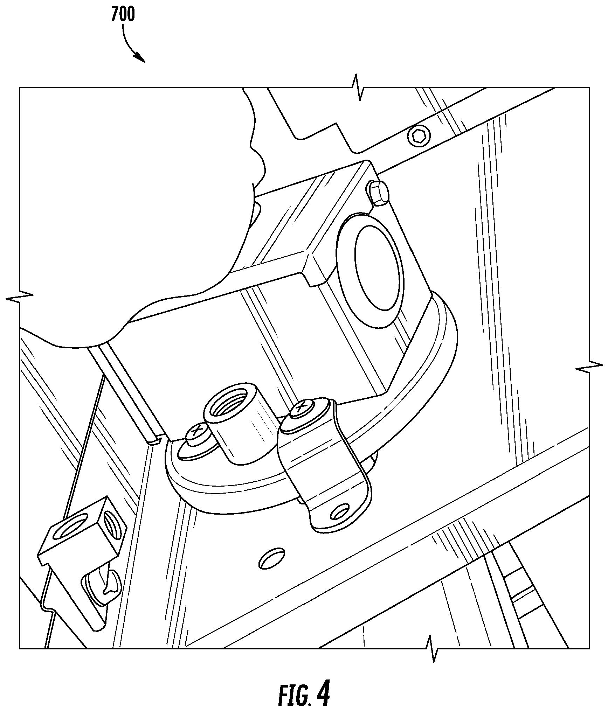

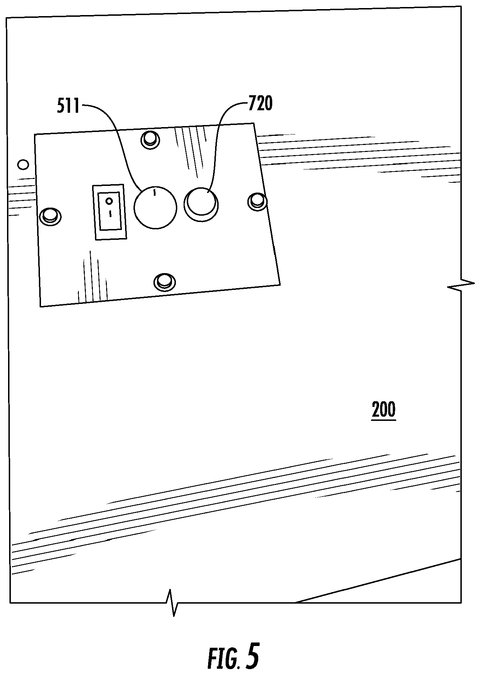

To function efficiently and effectively remove contaminants from the air, the filters (e.g., the pre-filters 300 and the HEPA filters 400) of the multi-compartment negative air filtration system 100 need to remain unclogged. To monitor the status of the filters the multi-compartment negative air filtration system 100 may include a pressure switch 700 (as shown in FIGs. 1 and 4). The pressure switch 700 may be operably connected to an indicator 720 (e.g., through one or more wired or wireless connections). The indicator 720 may include any device capable of signaling (e.g., capable of generating a sound and/or light). In certain instances, the indicator 720 is a light (e.g., an LED) disposed on the housing 200 (as shown in FIG. 5). The indicator 720 may be used by the multi-compartment negative air filtration system 100 to signal (e.g., by flashing) when at least one of the pre-filters 300 and the HEPA filters 400 are in need of replacement.

The pressure switch 700 may trigger the indicator 720 using a diaphragm (not shown). For example, the pressure switch 700 may have a flexible diaphragm connected to a tube 710 (shown in FIG. 1). The diaphragm may move relative to a change in pressure (e.g., triggering the indicator 720). The tube 710 may include a first end 711 disposed outside the housing 200 (e.g., open to atmosphere) and a second end 712 disposed inside the housing 200 (e.g., between the fan assembly 500 and the HEPA filter 400). Thus, the pressure switch 700 may monitor a pressure change between at least one of fan assemblies 500 and at least one of the HEPA filters 400 and trigger the indicator 720 when the pressure drops to a point that is indicative of a filter (e.g., a pre-filter 300 or a HEPA filter 400) being clogged to the point that it is in need of replacement. It should be appreciated that the configuration of a pre-filters 300 upstream of the HEPA filters 400 may mitigate the HEPA filter 400 from becoming clogged with larger particles (e.g., dust, hair, etc.). As mentioned above, clogged filters may affect the efficiency of the multi-compartment negative air filtration system 100. For example, a clogged filter may cause the fan assemblies 500 to consume more power.

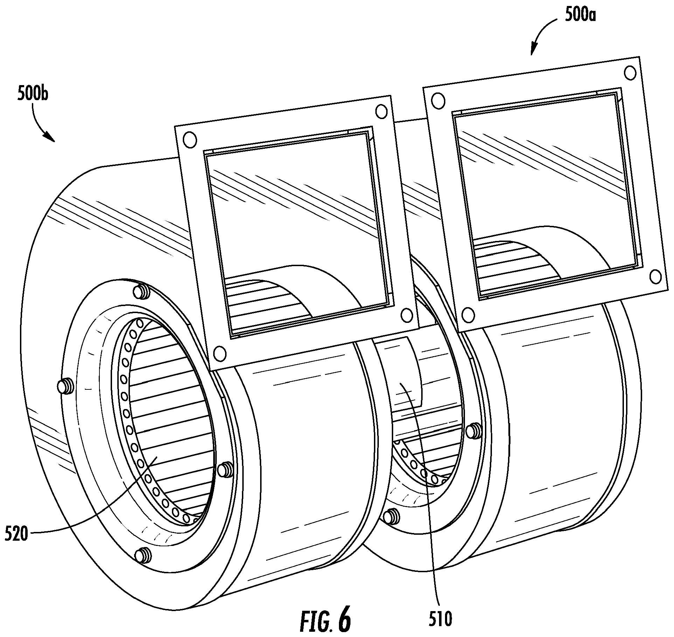

A perspective view of the exemplary fan assemblies 500 is shown in FIG. 6. As shown, the fan assembly 500(a) of the first compartment 201 and the fan assembly 500(b) of the second compartment 202 may share a constant torque motor 510. This shared motor 510 may drive each forward curved wheel blowers 520 (which, as shown, may be independently positioned within a respective compartment 201, 202). It should be appreciated that this shared motor 510 may result in reduced power consumption (when compared to if two independent motors 510 were used for each fan assembly 500). In addition, by having a shared motor 510, there is potential to operate the motor at lower speed while still achieve the desired airflow. This may result in less noise being generated by the motor 510, which, depending on the environment in which the system 100 is used, may be beneficial. It is envisioned that multi-compartment negative air filtration system 100 may be used in classrooms, offices, hospitals, etc., each of which may have a desire for reduced ambient noise. It is envisioned, although not shown, that each fan assembly 500 may include independent motors 510 (each positioned independently from one another within a respective compartment 201, 202).

In certain instances, the fan assemblies 500 may not use a constant CFM motor (e.g., which may incorporate one or more microprocessor). The constant torque motor 510 may be operably connected (e.g., through one or more wired or wireless connections) to a selection device 511 (e.g. a dial shown in FIG. 5). The selection device 511 may be configured to adjust the operating torque (e.g., which may correlate to an approximately constant RPM) between various approximately constant torques. An approximately constant torque may mean that the torque does not vary substantially during operation (e.g., +/- 100 Nm from the set torque). For example, the selection device 511 may change the operating torque of the constant torque motor(s) 510 between a number (e.g., five or more) of different present constant torques, which may not vary substantially during operation (e.g., without adjusting the dial 511). In certain instances, the approximately constant RPM for which the torque correlates to is between 800 and 1500 RPM. The selection device 511 may make it possible to adjust the output (e.g., the CFM) of the fan assemblies 500 based on the size of the particular space that the multi-compartment negative air filtration system 100 is being used in. For example, the selection device 511 may increase the torque for a larger room and decrease the torque for a smaller room. Regardless of the size of the room, the fan assemblies 500 may be used to pull air through the HEPA filters 400 to remove contaminants (e.g., microbes) from the air.

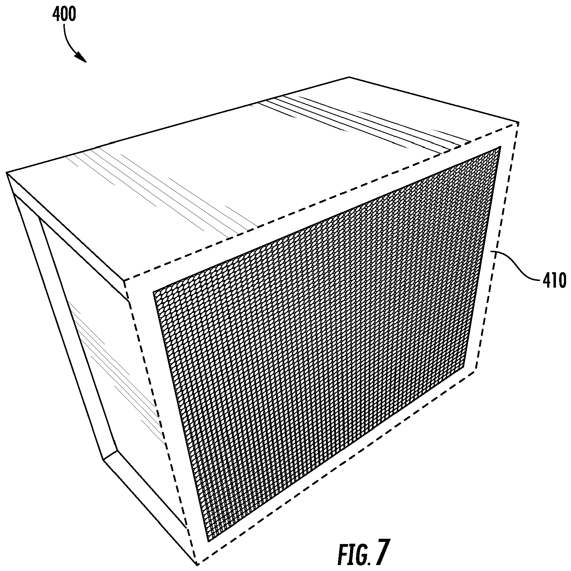

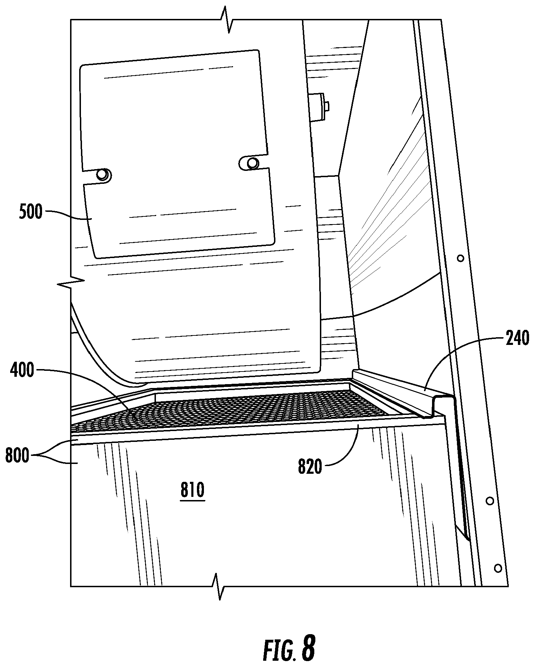

The multi-compartment negative air filtration system 100 may prevent air from bypassing the HEPA filters 400. An exemplary embodiment of a HEPA filter 400 is shown in FIG. 7. As shown in FIG. 7, the HEPA filters 400 may include an exterior perimeter 410. The multi-compartment negative air filtration system 100 may include a sealing assembly 800 disposed about the exterior perimeter 410 of each respective HEPA filter 400 (shown in FIG. 8). The sealing assemblies 800 may include at least one gasket 820 (e.g., composed of a rubber or silicone material) and at least one planar member 810 (e.g., composed of a sheet metal or plastic). The sealing assemblies 800 are configured to prevent a bypass around the HEPA filters 400. For example, the sealing assemblies 800 may be configured in such a way that prevents any of the air that enters the multi-compartment negative air filtration system 100 from passing through the outlet 220 without first passing through a HEPA filter 400. In certain instances, the housing 200 includes a mounting rail 240 extending from the interior surface 230 (e.g., within each compartment 201, 202). The mounting rail 240 may be disposed adjacent to the sealing assemblies 800 (e.g., in an overlapping manner, as shown in FIG. 8).

The design and configuration of the multi-compartment negative air filtration system 100 may make the multi-compartment negative air filtration system 100 easy to install and/or move, which might be advantageous in environments where time is of the essence (e.g., in hospital settings, etc.). Additionally, the multi-compartment negative air filtration system 100 may be designed in such a way that its footprint (e.g., the amount of space required) is minimal. For example, the multi-compartment negative air filtration system 100 may take up less than 8 square feet (0.7m²) of floor space (e.g., the surface area of the lower surface 206 may be less than 4 square feet (0.35m²)). This may be possible due to the orientation of the multi-compartment negative air filtration system 100. For example, the multi-compartment negative air filtration system 100 may be configured to be vertically oriented (as shown in FIG. 1) where the outlets 220 are disposed on the upper surface 208 and the inlets 210 are disposed on the lower surface 206. The multi-compartment negative air filtration system 100 may include a plurality of wheels 250 disposed on the lower surface 206 of the housing 200. These wheels 250 may make it possible to move the multi-compartment negative air filtration system 100 between rooms (e.g., from one hospital room to another).

As described above, the design and configuration of the multi-compartment negative air filtration system 100 makes it possible to remove contaminants (e.g., microbes) from air in an effective and reliable manner, with increased flexibility (e.g., when compared to existing negative air machines that only one inlet and only one outlet). As mentioned above, the multi-compartment negative air filtration system 100 described herein, by including multiple compartments, each with their own inlet and outlet, may have increased flexibility for providing optimal treatment. For example, instead of only being able to exhaust the treated in a single direction (i.e., either within the room or outside the room), the multi-compartment negative air filtration system 100 described herein may be able to exhaust the treated air in multiple directions, resulting in increased control of airflow within the room. This benefit is illustrated in FIG. 9, which depicts a room 10 (representing a hospital room). As shown, by operating the second compartment 202 in an air scrubber mode (where the treated air is discharged inside the room 10) and the first compartment 201 in a negative air mode (where the treated air is discharged outside the room 10), the airflow within the room 10 can be optimized. For example, the treated air from the second compartment 202 may be discharged in the nursing station 12, which may cause a positive pressure in the nursing station 12. This may help mitigate airflow from the patient's bed 11 from flowing into the nursing station 12 (which may help prevent further infections of hospital staff, etc.). It will be appreciated that similar configurations may be used in other settings. It is envisioned that either side of the multi-compartment negative air filtration system 100 may be operated in either an air scrubber mode or a negative air mode.

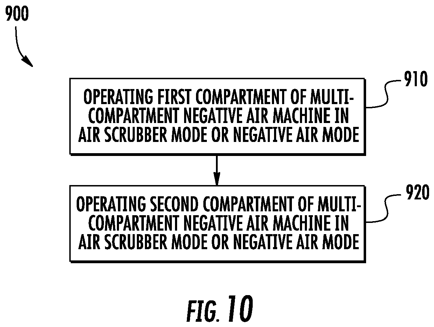

The method 900 for operating a multi-compartment negative air filtration system 100 is shown in FIG. 10. This method 900 may be completed, for example, using the exemplary multi-compartment negative air filtration system 100 shown in FIGs. 1. As described above, the multi-compartment negative air filtration system 100 may include a housing 200 defining a first compartment 201 and a second compartment 202 separated by at least one panel member 203. Each of the first compartment 201 and the second compartment 202 may include a pre-filter 300, a HEPA filter 400 disposed downstream of the pre-filter 300, and a fan assembly 500. As described above, the fan assemblies 500 may be disposed downstream of the HEPA filters 400. The method 900 includes step 910 for operating the first compartment 201 in at least one of an air scrubber mode and a negative air mode, the air scrubber mode being defined by a first exhausted air (exiting the first outlet 220(a)) being discharged within the room 10, the negative air mode being defined by the first exhausted air (exiting the first outlet 220(a)) being discharged outside the room 10. The method 900 includes step 920 for operating the second compartment 202 in at least one of an air scrubber mode and a negative air mode, the air scrubber mode being defined by a second exhausted air (exiting the second outlet 220(b)) being discharged within the room 10, the negative air mode being defined by the second exhausted air (exiting the second outlet 220(b)) being discharged outside the room 10. In certain instances both the first compartment 201 and the second compartment 202 are operated identically (e.g., in the same mode). However, as described above and shown in FIG. 9, in certain instances one of the first compartment 201 and the second compartment 202 are operated in the air scrubber mode and one of the first compartment 201 and the second compartment 202 are operating in negative air mode.

The use of the terms "a" and "and" and "the" and similar referents, in the context of describing the invention, are to be construed to cover both the singular and the plural, unless otherwise indicated herein or cleared contradicted by context. The use of any and all example, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the present invention has been described with reference to an exemplary embodiment or embodiments, it will be understood by those skilled in the art that various changes may be made and equivalents may be substituted for elements thereof without departing from the scope of the present invention as defined in the appended claims. In addition, many modifications may be made to adapt a particular situation or material to the teachings of the present invention without departing from the scope of the appended claims. Therefore, it is intended that the present invention not be limited to the particular embodiment disclosed as the best mode contemplated for carrying out this present invention, but that the present invention will include all embodiments falling within the scope of the claims.

## Claims

1. A multi-compartment negative air filtration system (100) comprising:
a housing (200) comprising a first compartment (201) and a second compartment (202), the first compartment and the second compartment separated by at least one panel member (203), each of the first compartment and the second compartment comprising:
an inlet (210) and an outlet (220);
a pre-filter (300) disposed downstream of the inlet (210);
a HEPA filter (400) disposed downstream of the pre-filter (300); and
a fan assembly (500) disposed downstream of the HEPA filter (400), the fan assembly (500) in airflow communication with the pre-filter (300) and the HEPA filter (400), the fan assembly (500) generating a negative pressure across the pre-filter (300) and the HEPA filter (400),
**characterized in that** the fan assembly (500a) of the first compartment (201) and the fan assembly (500b) of the second compartment (202) share a constant torque motor (510) comprising an operating torque.

2. The multi-compartment negative air filtration system (100) of claim 1, wherein the constant torque motor (510) is operably connected to a selection device (511), the selection device (511) configured to adjust the operating torque.

3. The multi-compartment negative air filtration system (100) of claim 2 wherein operating torque correlates to an approximately constant RPM, wherein the approximately constant RPM is between 800 and 1500 RPM.

4. The multi-compartment negative air filtration system (100) of claim 1, 2 or 3, wherein the fan assembly (500a) of the first compartment (201) and the fan assembly (500b) of the second compartment (202) each independently comprise a forward curved wheel blower (520).

5. The multi-compartment negative air filtration system (100) of any of claims 1 to 4, wherein the housing (200) further comprises an interior surface (230), wherein an insulation (231) is disposed on at least a portion of the interior surface (230), and optionally wherein the insulation (231) comprises an exterior foil surface (233) and a fiberglass body (232).

6. The multi-compartment negative air filtration system (100) of any of claims 1 to 5, wherein each respective outlet (220) comprises a supply duct transition (600), each supply duct transition (600) comprising an outlet flange (610) and an outlet plate (620), wherein the outlet plate (620) includes a plurality of apertures disposed therein.

7. The multi-compartment negative air filtration system (100) of any of claims 1 to 6, further comprising at least one pressure switch (700), the pressure switch (700) operably connected to an indicator (720), the indicator disposed on the housing (200).

8. The multi-compartment negative air filtration system (100) of claim 7, wherein the pressure switch (700) comprises a tube (710), the tube comprising a first end (711) and a second end (712), the first end (711) disposed outside the housing (200) and the second end (712) disposed between the fan assembly (500) and the HEPA filter (400), and/or wherein the indicator (720) is configured to signal when at least one of the pre-filter (300) and the HEPA filter (400) are in need of replacement.

9. The multi-compartment negative air filtration system (100) of any of claims 1 to 8, wherein the HEPA filter (400) comprises an exterior perimeter (410), a sealing assembly (800) disposed about the exterior perimeter (410), the sealing assembly (800) configured to prevent a bypass around the HEPA filter (400).

10. The multi-compartment negative air filtration system (100) of claim 9, wherein the sealing assembly (800) comprises at least one gasket (820) and at least one planar member (810), and/or wherein the system comprises a mounting rail disposed within the housing, the mounting rail disposed adjacent the sealing assembly.

11. The multi-compartment negative air filtration system (100) of any of claims 1 to 10, wherein the inlet (210) is disposed on a lower surface (206) of the housing (200) and the outlet (220) is disposed on an upper surface (208) of the housing (200), the inlet (210) and the outlet (220) being vertically oriented.

12. The multi-compartment negative air filtration system (100) of claim 11, further comprising a plurality of wheels (250) disposed on the lower surface (206) of the housing (200), and/or wherein the lower surface (206) comprises a surface area less 8 sq. ft. (0.7m²).

13. A method for operating a multi-compartment negative air filtration system (100) within a room (10), the multi-compartment negative air filtration system (100) comprising a housing (200) comprising a first compartment (201) and a second compartment (202) separated by at least one panel member (203), each of the first compartment (201) and the second compartment (202) comprising a pre-filter (300), a HEPA filter (400) disposed downstream of the pre-filter (300), and a fan assembly (500) disposed downstream of the HEPA filter (400), wherein the fan assembly (500a) of the first compartment (201) and the fan assembly (500b) of the second compartment (202) share a constant torque motor (510) comprising an operating torque, the method comprising:
operating the first compartment (201) in at least one of an air scrubber mode and a negative air mode, the air scrubber mode being defined by a first exhausted air being discharged within the room (10), the negative air mode being defined by the first exhausted air being discharged outside the room (10); and
operating the second compartment (202) in at least one of an air scrubber mode and a negative air mode, the air scrubber mode being defined by a second exhausted air being discharged within the room (10), the negative air mode being defined by the second exhausted air being discharged outside the room (10).

14. The method of claim 13, wherein both the first compartment (201) and the second compartment (202) are operated identically.

15. The method of claim 13, wherein one of the first compartment (201) and the second compartment (202) are operated in the air scrubber mode and one of the first compartment (201) and the second compartment (202) are operating in negative air mode.

## Patentansprüche

1. Unterdruckfiltrationssystem (100) mit mehreren Fächern, Folgendes umfassend:
ein Gehäuse (200), umfassend ein erstes Fach (201) und ein zweites Fach (202), wobei das erste Fach und das zweite Fach durch mindestens ein Paneelelement (203) getrennt sind, wobei jedes von dem ersten Fach und dem zweiten Fach Folgendes umfasst:
einen Einlass (210) und einen Auslass (220);
ein Vorfilter (300), das stromabwärts des Einlasses (210) angeordnet ist;
ein HEPA-Filter (400), das stromabwärts des Vorfilters (300) angeordnet ist; und
eine Lüfteranordnung (500), die stromabwärts des HEPA-Filters (400) angeordnet ist, wobei die Lüfteranordnung (500) in Luftströmungsverbindung mit dem Vorfilter (300) und dem HEPA-Filter (400) steht, wobei die Lüfteranordnung (500) einen Unterdruck über dem Vorfilter (300) und dem HEPA-Filter (400) erzeugt,
**dadurch gekennzeichnet, dass** sich die Lüfteranordnung (500a) des ersten Faches (201) und die Lüfteranordnung (500b) des zweiten Faches (202) einen Motor (510) mit konstantem Drehmoment teilen, der ein Betriebsdrehmoment umfasst.

2. Unterdruckfiltrationssystem (100) mit mehreren Fächern nach Anspruch 1, wobei der Motor (510) mit konstantem Drehmoment mit einer Auswahlvorrichtung (511) wirkverbunden ist, wobei die Auswahlvorrichtung (511) konfiguriert ist, um das Betriebsdrehmoment einzustellen.

3. Unterdruckfiltrationssystem (100) mit mehreren Fächern nach Anspruch 2, wobei das Betriebsdrehmoment mit einer annähernd konstanten Drehzahl korreliert, wobei die annähernd konstante Drehzahl zwischen 800 und 1500 U/min liegt.

4. Unterdruckfiltrationssystem (100) mit mehreren Fächern nach Anspruch 1, 2 oder 3, wobei die Lüfteranordnung (500a) des ersten Faches (201) und die Lüfteranordnung (500b) des zweiten Faches (202) jeweils unabhängig voneinander ein vorwärts gekrümmtes Radgebläse (520) umfassen.

5. Unterdruckfiltrationssystem (100) mit mehreren Fächern nach einem der Ansprüche 1 bis 4, wobei das Gehäuse (200) ferner eine Innenfläche (230) umfasst, wobei eine Isolierung (231) auf mindestens einem Abschnitt der Innenfläche (230) angeordnet ist und optional wobei die Isolierung (231) eine äußere Folienfläche (233) und einen Glasfaserkörper (232) umfasst.

6. Unterdruckfiltrationssystem (100) mit mehreren Fächern nach einem der Ansprüche 1 bis 5, wobei jeder jeweilige Auslass (220) einen Zufuhrkanalübergang (600) umfasst, wobei jeder Zufuhrkanalübergang (600) einen Auslassflansch (610) und eine Auslassplatte (620) umfasst, wobei die Auslassplatte (620) eine Vielzahl von darin angeordneten Öffnungen beinhaltet.

7. Unterdruckfiltrationssystem (100) mit mehreren Fächern nach einem der Ansprüche 1 bis 6, ferner umfassend mindestens einen Druckschalter (700), wobei der Druckschalter (700) mit einer Anzeige (720) wirkverbunden ist, wobei die Anzeige an dem Gehäuse (200) angeordnet ist.

8. Unterdruckfiltrationssystem (100) mit mehreren Fächern nach Anspruch 7, wobei der Druckschalter (700) ein Rohr (710) umfasst, wobei das Rohr ein erstes Ende (711) und ein zweites Ende (712) umfasst, wobei das erste Ende (711) außerhalb des Gehäuses (200) angeordnet ist und das zweite Ende (712) zwischen der Lüfteranordnung (500) und dem HEPA-Filter (400) angeordnet ist und/oder wobei die Anzeige (720) konfiguriert ist, um zu signalisieren, wenn mindestens eines von dem Vorfilter (300) und dem HEPA-Filter (400) ersetzt werden muss.

9. Unterdruckfiltrationssystem (100) mit mehreren Fächern nach einem der Ansprüche 1 bis 8, wobei das HEPA-Filter (400) einen Außenumfang (410), eine Dichtungsanordnung (800), die um den Außenumfang (410) angeordnet ist, umfasst, wobei die Dichtungsanordnung (800) konfiguriert ist, um einen Bypass um den HEPA-Filter (400) zu verhindern.

10. Unterdruckfiltrationssystem (100) mit mehreren Fächern nach Anspruch 9, wobei die Dichtungsanordnung (800) mindestens eine Dichtung (820) und mindestens ein ebenes Element (810) umfasst und/oder wobei das System eine Montageschiene umfasst, die innerhalb des Gehäuses angeordnet ist, wobei die Montageschiene benachbart zu der Dichtungsanordnung angeordnet ist.

11. Unterdruckfiltrationssystem (100) mit mehreren Fächern nach einem der Ansprüche 1 bis 10, wobei der Einlass (210) an einer unteren Oberfläche (206) des Gehäuses (200) angeordnet ist und der Auslass (220) an einer oberen Oberfläche (208) des Gehäuses (200) angeordnet ist, wobei der Einlass (210) und der Auslass (220) vertikal ausgerichtet sind.

12. Unterdruckfiltrationssystem (100) mit mehreren Fächern nach Anspruch 11, ferner umfassend eine Vielzahl von Rädern (250), die an der unteren Oberfläche (206) des Gehäuses (200) angeordnet sind und/oder wobei die untere Oberfläche (206) eine Fläche kleiner als 8 Quadratfuß (0,7 m²) umfasst.

13. Verfahren zum Betreiben eines Unterdruckfiltrationssystems (100) mit mehreren Fächern innerhalb eines Raumes (10), wobei das Unterdruckfiltrationssystem (100) mit mehreren Fächern ein Gehäuse (200) umfasst, das ein erstes Fach (201) und ein zweites Fach (202) umfasst, die durch mindestens ein Paneelelement (203) getrennt sind, wobei jedes von dem ersten Fach (201) und dem zweiten Fach (202) ein Vorfilter (300), ein HEPA-Filter (400), das stromabwärts des Vorfilters (300) angeordnet ist, und eine Lüfteranordnung (500), die stromabwärts des HEPA-Filters (400) angeordnet ist, umfasst, wobei sich die Lüfteranordnung (500a) des ersten Faches (201) und die Lüfteranordnung (500b) des zweiten Faches (202) einen Motor (510) mit konstantem Drehmoment teilen, der ein Betriebsdrehmoment umfasst, wobei das Verfahren Folgendes umfasst:
Betreiben des ersten Faches (201) in mindestens einem von einem Luftwäschermodus und einem Negativluftmodus, wobei der Luftwäschermodus dadurch definiert ist, dass eine erste Abluft innerhalb des Raums (10) ausgestoßen wird, und der Negativluftmodus dadurch definiert ist, dass die erste Abluft außerhalb des Raums (10) ausgestoßen wird; und
Betreiben des zweiten Faches (202) in mindestens einem von einem Luftwäschermodus und einem Negativluftmodus, wobei der Luftwäschermodus dadurch definiert ist, dass eine zweite Abluft innerhalb des Raums (10) ausgestoßen wird, und der Negativluftmodus dadurch definiert ist, dass die zweite Abluft außerhalb des Raums (10) ausgestoßen wird.

14. Verfahren nach Anspruch 13, wobei sowohl das erste Fach (201) als auch das zweite Fach (202) identisch betrieben werden.

15. Verfahren nach Anspruch 13, wobei eines von dem ersten Fach (201) und dem zweiten Fach (202) im Luftwäschemodus betrieben wird und eines von dem ersten Fach (201) und dem zweiten Fach (202) im Negativluftmodus betrieben wird.

## Revendications

1. Système de filtration d'air négatif à plusieurs compartiments (100) comprenant :
un boîtier (200) comprenant un premier compartiment (201) et un second compartiment (202), le premier compartiment et le second compartiment étant séparés par au moins un élément de panneau (203), chacun du premier compartiment et du second compartiment comprenant :
une entrée (210) et une sortie (220) ;
un préfiltre (300) disposé en aval de l'entrée (210) ;
un filtre HEPA (400) disposé en aval du préfiltre (300) ; et
un ensemble ventilateur (500) disposé en aval du filtre HEPA (400), l'ensemble ventilateur (500) étant en communication d'écoulement d'air avec le préfiltre (300) et le filtre HEPA (400), l'ensemble ventilateur (500) générant une pression négative à travers le préfiltre (300) et le filtre HEPA (400), **caractérisé en ce que** l'ensemble ventilateur (500a) du premier compartiment (201) et l'ensemble ventilateur (500b) du second compartiment (202) partagent un moteur à couple constant (510) comprenant un couple de fonctionnement.

2. Système de filtration d'air négatif à plusieurs compartiments (100) selon la revendication 1, dans lequel le moteur à couple constant (510) est relié de manière fonctionnelle à un dispositif de sélection (511), le dispositif de sélection (511) étant configuré pour ajuster le couple de fonctionnement.

3. Système de filtration d'air négatif à plusieurs compartiments (100) selon la revendication 2, dans lequel le couple de fonctionnement est corrélé à un régime approximativement constant, dans lequel le régime approximativement constant est compris entre 800 et 1500 tours/minute.

4. Système de filtration d'air négatif à plusieurs compartiments (100) selon la revendication 1, 2 ou 3, dans lequel l'ensemble ventilateur (500a) du premier compartiment (201) et l'ensemble ventilateur (500b) du second compartiment (202) comprennent chacun indépendamment une soufflante de roue incurvée vers l'avant (520).

5. Système de filtration d'air négatif à plusieurs compartiments (100) selon l'une quelconque des revendications 1 à 4, dans lequel le boîtier (200) comprend en outre une surface intérieure (230), dans lequel une isolation (231) est disposée sur au moins une partie de la surface intérieure (230), et éventuellement dans lequel l'isolation (231) comprend une surface de feuille extérieure (233) et un corps en fibre de verre (232).

6. Système de filtration d'air négatif à plusieurs compartiments (100) selon l'une quelconque des revendications 1 à 5, dans lequel chaque sortie respective (220) comprend une transition de conduit d'alimentation (600), chaque transition de conduit d'alimentation (600) comprenant une bride de sortie (610) et une plaque de sortie (620), dans lequel la plaque de sortie (620) comporte une pluralité d'ouvertures disposées dans celle-ci.

7. Système de filtration d'air négatif à plusieurs compartiments (100) selon l'une quelconque des revendications 1 à 6, comprenant en outre au moins un pressostat (700), le pressostat (700) étant relié de manière fonctionnelle à un indicateur (720), l'indicateur étant disposé sur le boîtier (200).

8. Système de filtration d'air négatif à plusieurs compartiments (100) selon la revendication 7, dans lequel le pressostat (700) comprend un tube (710), le tube comprenant une première extrémité (711) et une seconde extrémité (712), la première extrémité (711) étant disposée à l'extérieur du boîtier (200) et la seconde extrémité (712) étant disposée entre l'ensemble ventilateur (500) et le filtre HEPA (400), et/ou dans lequel l'indicateur (720) est configuré pour signaler lorsque au moins l'un du préfiltre (300) et du filtre HEPA (400) ont besoin d'être remplacés.

9. Système de filtration d'air négatif à plusieurs compartiments (100) selon l'une quelconque des revendications 1 à 8, dans lequel le filtre HEPA (400) comprend un périmètre extérieur (410), un ensemble d'étanchéité (800) disposé autour du périmètre extérieur (410), l'ensemble d'étanchéité (800) étant configuré pour empêcher une dérivation autour du filtre HEPA (400) .

10. Système de filtration d'air négatif à plusieurs compartiments (100) selon la revendication 9, dans lequel l'ensemble d'étanchéité (800) comprend au moins un joint (820) et au moins un élément plan (810), et/ou dans lequel le système comprend un rail de montage disposé à l'intérieur du boîtier, le rail de montage étant disposé de manière adjacente à l'ensemble d'étanchéité.

11. Système de filtration d'air négatif à plusieurs compartiments (100) selon l'une quelconque des revendications 1 à 10, dans lequel l'entrée (210) est disposée sur une surface inférieure (206) du boîtier (200) et la sortie (220) est disposée sur une surface supérieure (208) du boîtier (200), l'entrée (210) et la sortie (220) étant orientées verticalement.

12. Système de filtration d'air négatif à plusieurs compartiments (100) selon la revendication 11, comprenant en outre une pluralité de roues (250) disposées sur la surface inférieure (206) du boîtier (200), et/ou dans lequel la surface inférieure (206) comprend une surface inférieure à 8 pieds carrés (0,7 m²) .

13. Procédé de fonctionnement d'un système de filtration d'air négatif à plusieurs compartiments (100) dans une pièce (10), le système de filtration d'air négatif à plusieurs compartiments (100) comprenant un boîtier (200) comprenant un premier compartiment (201) et un second compartiment (202) séparés par au moins un élément panneau (203), chacun du premier compartiment (201) et du second compartiment (202) comprenant un préfiltre (300), un filtre HEPA (400) disposé en aval du préfiltre (300) et un ensemble ventilateur (500) disposé en aval du filtre HEPA (400), dans lequel l'ensemble ventilateur (500a) du premier compartiment (201) et l'ensemble ventilateur (500b) du second compartiment (202) partagent un moteur à couple constant (510) comprenant un couple de fonctionnement, le procédé comprenant :
le fonctionnement du premier compartiment (201) en au moins l'un d'un mode épurateur d'air et d'un mode air négatif, le mode épurateur d'air étant défini par un premier air évacué libéré à l'intérieur de la pièce (10), le mode air négatif étant défini par le premier air évacué libéré à l'extérieur de la pièce (10) ; et
le fonctionnement du second compartiment (202) en au moins l'un d'un mode épurateur d'air et d'un mode air négatif, le mode épurateur d'air étant défini par un second air évacué libéré à l'intérieur de la pièce (10), le mode air négatif étant défini par le second air évacué libéré à l'extérieur de la pièce (10).

14. Procédé selon la revendication 13, dans lequel le premier compartiment (201) et le second compartiment (202) fonctionnent de manière identique.

15. Procédé selon la revendication 13, dans lequel l'un du premier compartiment (201) et du second compartiment (202) fonctionne en mode épurateur d'air et l'un du premier compartiment (201) et du second compartiment (202) fonctionne en mode air négatif.
